# EUROPÄISCHE PATENTANMELDUNG

(11) **EP 2 774 734 A1**
(43) Veröffentlichungstag der Anmeldung: **10.09.2014**
(21) Anmeldenummer: 14156742.0
(22) Anmeldetag: 26.02.2014
(51) Int. Cl.: B27D 5/00, B05D 7/06, B29C 63/00

(54) **Verfahren zum Vergüten von Möbelplatten**

(30) Priorität: 08.03.2013 DE 102013102351
(71) Anmelder: W. Döllken & Co. GmbH, 45964 Gladbeck (DE)
(72) Erfinder:
(74) Vertreter: von dem Borne, Andreas

(57) **Zusammenfassung**

Die Erfindung betrifft ein Verfahren zum Vergüten von Möbelplatten (1), wobei eine Kantenleiste (2) an zumindest einer Schmalfläche der Möbelplatte (1) unter Bildung einer Verbindungsfuge (3) befestigt ist oder befestigt wird. Dieses Verfahren ist dadurch gekennzeichnet, dass auf die Möbelplatte (1) nach oder vor dem Befestigen der Kantenleiste (2) im Bereich der Verbindungsfuge (3) ein Hydrophobierungsmittel aufgebracht wird.

## Beschreibung

Die Erfindung betrifft ein Verfahren zum Vergüten von Möbelplatten, wobei eine Kantenleiste an zumindest einer Schmalfläche der Möbelplatte unter Bildung einer Verbindungsfuge befestigt ist oder befestigt wird.

Möbelplatte meint im Rahmen der Erfindung insbesondere eine Holzwerkstoffplatte, zum Beispiel eine Spanplatte oder Faserplatte, welche bevorzugt einseitig oder beidseitig (d. h. oberseitig und/oder unterseitig) mit Beschichtungen versehen und folglich beschichtet ist. Bei solchen Beschichtungen kann es sich um harzgetränkte Papiere oder auch Folien handeln. Es ist grundsätzlich bekannt, solche Möbelplatten an ihren (stirnseitigen) Schmalflächen mit Kantenleisten zu versehen. Solche Kantenleisten bzw. Deckleisten werden auch einfach als Kanten oder Kantenbänder oder auch als Umleimer bezeichnet. Die Kantenleisten können auf unterschiedlichste Weise an den Möbelplatten befestigt werden.

Das erfindungsgemäße Verfahren umfasst zunächst einmal die Befestigung solcher Kantenleisten auf den Schmalseiten von Möbelplatten mit Hilfe eines Schmelzklebstoffs, der im Zuge der Befestigung bzw. unmittelbar vor der Befestigung auf die Kantenleiste aufgetragen wird. Die Befestigung erfolgt in sogenannten Kantenbandanleimmaschinen. Die Kanten können auch mit Schmelzklebstoff vorbeschichtet sein oder es können Kanten verwendet werden, die mit einer Schmelzklebstoffschicht oder einer schmelzklebstoffartigen Funktionalschicht koextrudiert sind (vgl. z. B. EP 1 852 242 A1).

Alternativ umfasst das erfindungsgemäße Verfahren aber auch die Befestigung von Kantenleisten unter Verzicht auf Schmelzklebstoff, in dem zum Beispiel die Kantenleiste selbst mit Hilfe von Strahlung und/oder Wärme aufgeschmolzen wird (vgl. EP 1 163 864 B1).

Unabhängig von der Art der Befestigung entsteht eine Verbindungsfuge. Bei Möbelplatten, insbesondere Holzwerkstoffplatten, besteht in der Praxis das Problem, dass es zu Quellungen der Platte in Bereichen kommt, in denen die Platte mit Wasser in Kontakt kommt. Dies ist zum Beispiel bei Küchenarbeitsplatten, Küchenfronten, Küchenschränken, Badschränken, Tischplatten usw. der Fall. Es kommt folglich zu Beschädigungen der Möbelplatten durch Wasser/Feuchtigkeit. Dies führt zu erheblichen Kosten durch erforderliche Reparaturen.

Problematisch ist dabei die Tatsache, dass das Wasser über die Verbindungsfuge in die Holzwerkstoffplatte eintritt. Verbindungsfuge meint im Rahmen der Erfindung nicht einen freien Spalt zwischen Stirnfläche der Möbelplatte und der Kantenleiste, sondern eine Fuge, die von dem "Verbindungsmaterial", z. B. dem Schmelzklebstoff oder eine anderen Schmelzschicht oder dergleichen im Zuge der Verbindung gebildet wird. Insbesondere bei der Verarbeitung mit herkömmlichen Schmelzklebstoffen besteht das Problem, dass die von dem Schmelzklebstoff gebildete Fuge (Leimfuge) nicht vollständig geschlossen ist. Der aufgetragene Klebstofffilm kann vor der Verpressung der Kantenleiste auf der Möbelplatte abkühlen, so dass kleinere Kapillare in der Klebstofffuge entstehen, da der Film nicht mehr flächig verpresst werden kann. Dies kann insbesondere dann auftreten, wenn die Temperaturen der verwendeten Materialien (Holzwerkstoffplatte, Kantenleiste und/oder Schmelzklebstoff) verhältnismäßig niedrig sind, z. B. wenn saisonale Bedingungen/Wetterbedingungen die Verarbeitung beeinflussen. Ferner besteht in der Praxis das Problem, dass die verwendeten Klebstoff-Auftragsgeräte nicht immer ausreichend temperaturkonstant im Verlauf von Produktionen und insbesondre von Aufheizphasen sind.

Darüber hinaus kann bei der Formatierung der Plattenbauteile (dem sogenannten Fügefräsen der Plattenbauteile vor dem Aufbringen der Kantenleisten) die Möglichkeit bestehen, dass die Beschichtungen der Holzwerkstoffplatten (z. B. Deckschichten aus harzgetränkten Papieren oder Folien) beschädigt werden. Solche Beschichtungen/Deckschichten von dekorativen Holzwerkstoffplatten sind in der Regel phenolharzgetränkte Papiere, die eine gewisse Sprödigkeit besitzen. In Folge der mechanischen Bearbeitung durch Fräswerkzeuge oder dergleichen, können diese Oberflächen beschädigt werden. Es können kleine Haarrisse oder Kapillare entstehen, welche Wasser/Feuchtigkeit in die Platte einbringen lassen. Dann besteht die Gefahr, dass die Holzspäne und/oder Holzfasern der Holzwerkstoffplatten sich mit Wasser vollsaugen, so dass es zum Quellen des Plattenbauteil kommen kann. Das Bauteil bzw. Möbelteil wird dadurch irreparabel beschädigt.

Schließlich besteht in der Praxis die Gefahr, dass die Beschichtungen der dekorativen Holzwerkstoffplatten (z. B. harzgetränkte Papiere oder Folien) im Zuge einer Nachbearbeitung der auf der Möbelplatte befestigten Kantenleiste beschädigt werden. Denn es ist üblich, die Möbelplatten nicht nur vor dem Befestigen der Kantenleiste spanabhebend zu bearbeiten, sondern auch nach dem Befestigen der Kantenleiste erfolgt eine spanabhebende Bearbeitung der Kantenleiste, um einen Kantenüberstand zu entfernen und/oder die Form der Kanten zu optimieren. In der Praxis spricht man vom Bündigfräsen und/oder Radienfräsen. Ferner wird auch eine nachgelagerte Ziehklingenbearbeitung realisiert. Stets besteht die Gefahr, dass die Beschichtungen/Deckschichten der dekorativen Holzwerkstoffplatte beschädigt werden. Über die auf diese Weise offengelegte Papierstruktur kann dann Wasser in die Holzwerkstoffplatte diffundieren, so dass das Bauteil wiederum quillt und irreversibel beschädigt wird.

Insgesamt kann das Eindringen von Wasser/Wasserdampf in die Holzwerkstoffplatte in der Praxis Probleme bereiten. - Hier setzt die Erfindung ein.

Im Übrigen beschreibt die EP 0 331 667 A1 eine Holzspanplatte, insbesondere Küchenarbeitsplatte, welche eine Laminatabdeckung an der Oberseite und an wenigstens einer Stirnseite sowie vorzugsweise eine Schutzfolie an der Unterseite aufweist. Um die Gefahr eines Aufquellens der Platte zu vermeiden, ist die Unterseite im Randbereich der laminierten Stirnseite mit einem feuchtigkeits- und dampffesten Lackstrich versehen, der entlang der Kante zur Stirnseite eine sich bis über die Fase des Stirnseitenlaminates erstreckende Wulst bildet. Im Vordergrund steht dabei die Versiegelung des gefährdeten Unterseitenbereiches der Platte durch den Lackanstrich sowie gegebenenfalls eine Schutzfolie.

Der Erfindung liegt die Aufgabe zugrunde, ein Verfahren der eingangs beschriebenen Art zu schaffen, mit dem sich Möbelplatten auf einfache und kostengünstige Weise derart vergüten lassen, dass Beschädigungen der Platte durch Wasser und/oder Wasserdampf nicht mehr zu befürchten sind.

Zur Lösung dieser Aufgabe lehrt die Erfindung bei einem gattungsgemäßen Verfahren zum Vergüten von Möbelplatten der eingangs beschrieben Art, dass auf die Möbelplatte nach und/oder vor dem Befestigen der Kantenleiste im Bereich der Verbindungsfuge ein Hydrophobierungsmittel aufgebracht wird.

Die Erfindung geht dabei von der Erkenntnis aus, dass sich durch Aufbringen eines Hydrophobierungsmittels (das heißt eines hydrophoben Mittels) im Bereich der Verbindungsfuge eine Versiegelung der Fuge erreichen lässt. Das hat zur Folge, dass Wasser oder Wasserdampf nicht mehr in die Fuge bzw. durch die Fuge in den Bereich des Holzwerkstoffs eindringen kann, so dass durch das erfindungsgemäße Verfahren ein Quellen des Holzwerkstoffs verhindert wird. Die Wasserbeständigkeit und Wasserdampfbeständigkeit wird durch das erfindungsgemäße Verfahren folglich deutlich erhöht. Selbst wenn es im Zuge der Bearbeitung der Möbelplatte und/oder der Kante vor und/oder nach dem Aufbringen der Kante auf die Möbelplatte zu Beschädigungen der Beschichtungen der Holzwerkstoffplatte kommen sollte, besteht aufgrund der Hydrophobierung der Fuge nicht mehr das Problem, dass Wasser eindringen kann.

Im Rahmen einer ersten Alternative wird vorgeschlagen, das Hydrophobierungsmittel nach dem Befestigen der Kantenleisten im Bereich der Verbindungsfuge aufzubringen. Die Kantenleiste wird folglich zunächst in herkömmlicher Weise an der Schmalfläche der Holzwerkstoffplatte befestigt und anschließend erfolgt in der beschriebenen Weise die Versiegelung der Fuge bzw. der Fugen. Dabei wird das Hydrophobierungsmittel bevorzugt lediglich gezielt im Bereich der Verbindungsfuge aufgebracht.

Im Rahmen einer zweiten Alternative wird das Hydrophobierungsmittel vor dem Befestigen der Kantenleiste aufgebracht. Es wird folglich zunächst das Hydrophobierungsmittel im Bereich der Stirnfläche der Holzwerkstoffplatte auf die Holzwerkstoffplatte aufgebracht und anschließend wird dann die Kantenleiste befestigt. Dabei kann die Stirnfläche der Möbelplatte vollflächig mit dem Hydrophobierungsmittel beaufschlagt werden. Bevorzugt erfolgt jedoch lediglich ein partieller Auftrag, z. B. lediglich in den beiden Randbereichen der Schmalfläche der Holzwerkstoffplatte. Dabei liegt dieser Überlegung die Erkenntnis zugrunde, dass es beim vorherigen Auftrag des Hydrophobierungsmittels ausreichend ist oder ausreichend sein kann, lediglich die Randbereiche mit dem Hydrophobierungsmittel zu beaufschlagen, da in diesen Randbereichen das Eindringen von Wasser/Wasserdampf nach dem Befestigen der Kantenleiste verhindert werden muss.

Schließlich besteht aber auch die Möglichkeit, beide Vorgehensweisen miteinander zu kombinieren und folglich sowohl vor dem Befestigen der Kantenleiste als auch nach dem Befestigen der Kantenleiste Hydrophobierungsmittel aufzubringen.

Bei dem Hydrophobierungsmittel kann es sich um zumindest ein Silan, Poly-siloxan, Polysilan, Isoalkan oder dergleichen handeln bzw. es kann ein Hydrophobierungsmittel auf Basis von Polysiloxanen, Silanen, Polysilanen und/oder Isoalkanen verwendet werden.

Es kann sich z. B. um ein modifiziertes bzw. funktionelles (aminofunktionelles) Polysiloxan bzw. eine Emulsion eines solchen Polysiloxans, z. B. in Wasser, handeln. Dabei kann grundsätzlich auf bekannte Hydrophobierungsmittel zurückgegriffen werden, z. B. ein Hydrophobierungsmittel auf Siloxan- bzw. Silan-Basis gemäß DE 10 2007 045 186 A1. Es kann sich z. B. auf Alkoxytriethoxysilan handeln, welches (im Wesentlichen) vollständig hydrolysiert und partiell vorkondensiert ist. Die Alkoxy-Gruppe ist in diesem Fall für den hydrophoben Charakter zuständig. Dabei kann es sich um aliphatischen Kohlenwasserstoff, Fluorkohlenwasserstoff oder andere Verbindungen handeln. Im Rahmen der Erfindung lässt sich aber auch auf Hydrophobierungsmittel ohne organische Modifizierung zurückgreifen, z. B. TEOS (Tetraethoxysilan). Alternativ können jedoch auch Hydrophobierungsmittel aus Isoalkanen bzw. auf Basis von Isoalkanen verwendet werden, z. B. ein Hydrophobierungsmittel, welches von der Firma Graffex (Oberhausen) unter der Bezeichnung Top-Coat vermarktet wird.

Das Hydrophobierungsmittel wird bevorzugt in flüssiger Form aufgebracht. Dabei kann es sich um eine Lösung, eine Emulsion oder auch eine Suspension handeln. Die verwendeten Silane, Siloxane, Polysilane, Polysiloxane oder dergleichen können folglich als Lösung bzw. Lösemittelmischung oder auch als wässrige Emulsion aufgebracht werden.

Das Hydrophobierungsmittel wird apparativ bevorzugt maschinell mit zumindest einer Auftragsvorrichtung aufgebracht. So kann das Hydrophobierungsmittel z. B. aufgesprüht werden, d. h. die Auftragsvorrichtung ist als Sprühvorrichtung ausgebildet. Alternativ kann der Auftrag auch mit zumindest einer Walze, einem Filz, einem Tuch oder einem Pinsel erfolgen.

Bevorzugt wird das Hydrophobierungsmittel im Bereich der Verbindungsfuge einer Kantenleiste beidseitig auf die Verbindungsfuge bzw. auf den Bereich der Möbelplatte mit der Verbindungsfuge aufgebracht. In einer horizontalen Orientierung der Möbelplatte erfolgt der Auftrag des Hydrophobierungsmittels im Bereich der Verbindungsfuge folglich oberseitig und unterseitig, z. B nach dem Bekannten. Dazu können z. B. zwei Auftragsvorrichtungen, z. B. zwei Sprühvorrichtungen (Sprühdüsen) vorgesehen sein. Der beidseitige Auftrag kann folglich bevorzugt zeitgleich erfolgen.

In der Regel wird die Möbelplatte vor dem Befestigen der Kantenleiste durch spanabhebende Bearbeitung formatiert. Außerdem ist es üblich, die Kantenleiste nach dem Befestigen an der Möbelplatte mechanisch zu bearbeiten. Es erfolgt z. B. ein Bündigfräsen und/oder eine Radienfräsung. Das Hydrophobierungsmittel wird bevorzugt nach dem Befestigen der Kantenleiste aufgebracht, und zwar bevorzugt nachdem die Kantenleiste mechanisch (nach-)bearbeitet wurde. Das Hydrophobierungsmittel wird folglich bevorzugt aufgebracht, nachdem die Befestigung und Nachbearbeitung der Kantenleiste abgeschlossen wurde. Alternativ liegt es jedoch im Rahmen der Erfindung, zunächst das Hydrophobierungsmittel auf die Holzwerkstoffplatte aufzubringen und die Kantenleiste anschließend zu befestigen.

Es ist zweckmäßig das Hydrophobierungsmittel kontinuierlich, d. h. in einem kontinuierlichen Durchlauf aufzutragen.

Die Befestigung von Kantenleisten an Möbelplatten erfolgt in der Praxis in Kantenleistenbefestigungsanlagen, die auch als Kantenbandanleimmaschinen (KAM) bezeichnet werden. In einer solchen Kantenbandanleimmaschine erfolgt folglich z. B. zunächst das Formatieren durch spanabhebende Bearbeitung, anschließend das Befestigen der Kantenleiste, z. B. durch Schmelzklebstoffauftrag oder auch durch Laserbestrahlung, Plasmabestrahlung oder Heißluftbeaufschlagung. Nach dem Befestigungen der Kantenleiste erfolgt die Nachträgliche spanabhebende Bearbeitung, z. B. durch Bündigfräsung, Radienfräsung und/oder Ziehklingenbearbeitung. Eine Auftragsvorrichtung für das Aufbringen des Hydrophobierungsmittels kann in eine solche Kantenleistenbefestigungsanlage integriert werden, so dass die Hydrophobierung dann in-line in der Kantenbandanleimmaschine erfolgt. Alternativ liegt es jedoch auch im Rahmen der Erfindung, die Hydrophobierung in einem nachgelagerten Arbeitsschritt bzw. in einer separaten Anlage durchzuführen.

Die Möglichkeit, den Auftrag des Hydrophobierungsmittels in eine Kantenbandanleimmaschine zu integrieren, besteht auch dann, wenn das Hydrophobierungsmittel vor dem Bekannten auf die Holzwerkstoffplatte aufgebracht wird. Auch bei diesem Verfahren besteht alternativ die Möglichkeit, die Hydrophobierung in einem vorgelagerten Arbeitsschritt bzw. in einer separaten Anlage durchzuführen.

Insgesamt hat die erfindungsgemäße Hydrophobierung der Verbindungsfuge den Vorteil, dass die eventuellen Fehlstellen der Fuge durch das hydrophobe Mittel geschlossen werden. Flüssigkeiten, insbesondere Wasser oder Feuchtigkeit können nicht mehr eindringen. Auch Fehler, die in der Kantennachbearbeitung gemacht werden, können vollständig oder zu einem bestimmten Teil vermindert werden. Ein weiterer positiver Aspekt ist, dass das Hydrophobierungsmittel die Fuge auch vor einer Verschmutzung schützt. Dieses ist insbesondere im Einsatz der Möbelplatten im Gesundheitsbereich von großen Vorteil.

Im Folgenden wird die Erfindung anhand einer lediglich ein Ausführungsbeispiel darstellenden Zeichnung näher erläutert. Es zeigen
- Fig. 1: eine schematisch vereinfachte Kantenbandanleimmaschine und
- Fig. 2: einen vergrößerten Querschnitt A-A durch den Gegenstand nach Fig. 1

In den Figuren ist eine Kantenbandanleimmaschine zum Vergüten von Möbelplatten dargestellt. Im Zuge der Vergütung der Möbelplatte 1 wird eine Kantenleiste 2 an zumindest einer Schmalfläche der Möbelplatte 1 befestigt. Die Befestigung der Kantenleiste 2, die auch als Kantenband oder Umleimer bezeichnet wird, erfolgt unter Bildung einer Verbindungsfuge 3. Erfolgt die Befestigung der Kantenleiste an der Möbelplatte z. B. mit Hilfe von Schmelzklebstoff, so entsteht zwischen Möbelplatte und Kantenleiste eine Schmelzklebstofffuge. Die Möbelplatte 1 ist in der Regel beidseitig mit einer Beschichtung 4 versehen. Bei dieser Beschichtung 4 kann es sich z. B. um ein harzgetränktes Papier handeln.

Die Arbeitsrichtung der Kantenbandanleimmaschine ist durch den Pfeil P angedeutet. Es ist erkennbar, dass die noch nicht vergütete Möbelplatte 1 zunächst mit einer Bearbeitungseinrichtung 5 mechanisch bearbeitet wird, z. B. durch spanabhebende Bearbeitung. Es erfolgt folglich eine Formatierung der Möbelplatte mit Hilfe der Bearbeitungsvorrichtung 5. Anschließend wird mit der lediglich angedeuteten Vorrichtung 6 die Kantenleiste 2 an der Schmalfläche der Möbelplatte 1 befestigt. Danach erfolgt mit Hilfe der Bearbeitungsvorrichtung 7 eine Nachbearbeitung der Kantenleiste 2, z. B. eine Bündigfräsung, eine Radienfräsung und/oder eine Ziehklingenbearbeitung. Einzelheiten sind nicht dargestellt. Insbesondere ist die Kantenleiste 2, die nach der Vorrichtung 6 an der sich entlang der Richtung P erstreckenden Schmalfläche befestigt ist, nicht dargestellt.

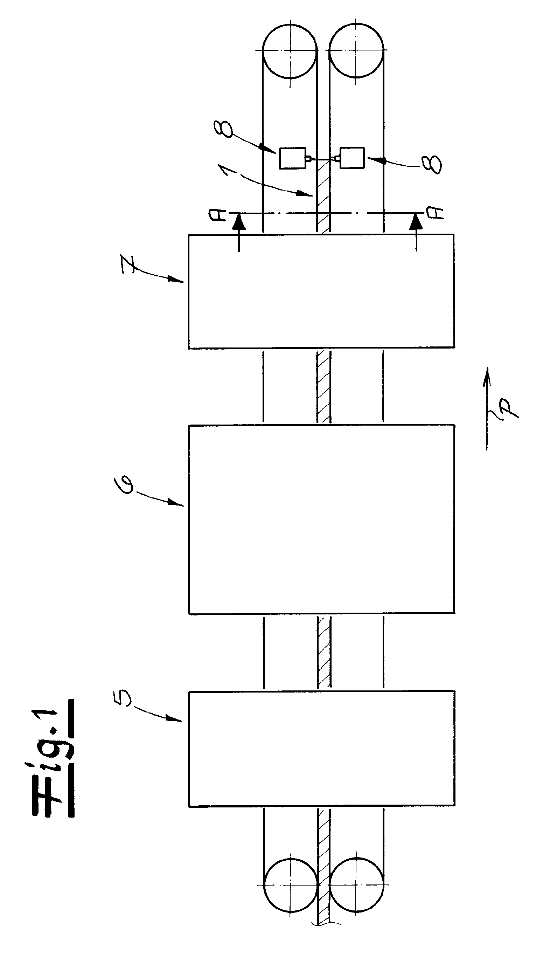

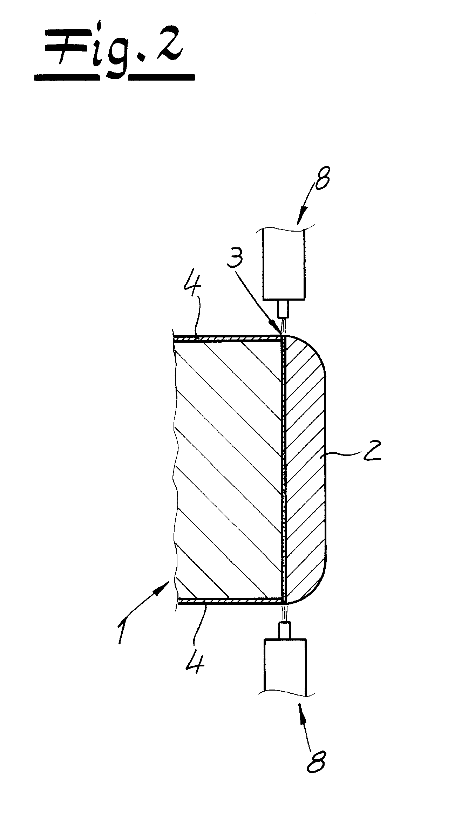

Erfindungsgemäß wird nun auf die Möbelplatte 1 nach dem Befestigen der in Fig. 1 nicht gezeigter Kantenleiste 2 (und vorzugsweise und nach der Nachbearbeitung) im Bereich der Verbindungsfuge 3 ein Hydrophobierungsmittel aufgebracht (vgl. Fig. 2). Dazu sind im Ausführungsbeispiel zwei Auftragsvorrichtungen 8 in Form von Sprühdüsen vorgesehen, welche ein flüssiges Hydrophobierungsmittel oberseitig und unterseitig auf den Bereich der Verbindungsfuge 3 der Möbelplatte aufsprühen, und zwar vorzugsweise im Durchlauf. In dem dargestellten Ausführungsbeispiel sind die Auftragsvorrichtungen 8 in die Kantenbandanleimmaschine integriert, so dass die Hydrophobierung in-line in der Kantenbandanleimmaschine erfolgt.

Aufbau und Funktionsweise solcher Sprühvorrichtungen sind grundsätzlich bekannt. Sie sind auch bereits in bekannte Kantenbandanleimmaschinen integriert, zum Beispiel um Antistatik- und Gleitmittel, Kühlmittel, Alkohole oder dergleichen in verschiedenen Verarbeitungsstufen aufzusprühen. Die grundsätzlich bekannten Sprühdüsen können nun erfindungsgemäß für das Aufbringen des Hydrophobierungsmittels in den Bereich der Verbindungsfuge verwendet werden.

Die Figuren zeigen eine erste Ausführungsform der Erfindung, bei welcher das Hydrophobierungsmittel nach dem Bekannten auf die Verbindungsfuge aufgebracht wird. Alternativ besteht die Möglichkeit, das Hydrophobierungsmittel vor der Bekantung auf die Platte aufzubringen. Eine solche Ausführungsform ist in den Figuren nicht gezeigt.

## Patentansprüche

1. Verfahren zum Vergüten von Möbelplatten (1), wobei eine Kantenleiste (2) an zumindest einer Schmalfläche der Möbelplatte (1) unter Bildung einer Verbindungsfuge (3) befestigt ist oder befestigt wird, **dadurch gekennzeichnet,**
**dass** auf die Möbelplatte (1) nach und/oder vor dem Befestigen der Kantenleiste (2) im Bereich der Verbindungsfuge (3) ein Hydrophobierungsmittel aufgebracht wird.

2. Verfahren nach Anspruch 1, **dadurch gekennzeichnet, dass** die Möbelplatte (1) als Holzwerkstoffplatte, z. B. Spanplatte oder Faserplatte ausgebildet ist, welche bevorzugt einseitig oder beidseitig mit einer oder mehreren Beschichtungen (4) beschichtet ist, z. B. mit (harzgetränktem) Papieren und/oder Folien oder dergleichen.

3. Verfahren nach Anspruch 1 oder 2, **dadurch gekennzeichnet, dass** das Hydrophobierungsmittel in flüssiger Form aufgebracht wird, z. B. als Lösung, Emulsion oder Suspension.

4. Verfahren nach einem der Ansprüche 1 bis 3, **dadurch gekennzeichnet, dass** das Hydrophobierungsmittel mit zumindest einer Auftragsvorrichtung (8) aufgebracht wird, z. B. mit einer Sprühvorrichtung aufgesprüht wird oder mit einer Auftragswalze, einem Auftragsfilz oder -tuch oder mit einem Auftragspinsel aufgebracht wird.

5. Verfahren nach einem der Ansprüche 1 bis 4, **dadurch gekennzeichnet, dass** als Hydrophobierungsmittel ein Silan, Polysilan, Polysiloxan und/oder Isoalkan dergleichen verwendet wird.

6. Verfahren nach einem der Ansprüche 1 bis 5, **dadurch gekennzeichnet, dass** das Hydrophobierungsmittel zeitgleich oder nacheinander beidseitig auf oder in die Verbindungsfuge (3) der Möbelplatte (1) aufgebracht wird, z. B. mit zwei Auftragsvorrichtungen (8).

7. Verfahren nach einem der Ansprüche 1 bis 6, **dadurch gekennzeichnet, dass** die Möbelplatte (1) vor dem Befestigen der Kantenleiste (2) durch spanabhebende Bearbeitung formatiert wird.

8. Verfahren nach einem der Ansprüche 1 bis 7, **dadurch gekennzeichnet, dass** die Kantenleiste (2) nach dem Befestigen an der Möbelplatte (1) und vorzugsweise vor dem Aufbringen des Hydrophobierungsmittels mechanisch bearbeitet wird, z. B. durch spanabhebende Bearbeitung.

9. Verfahren nach einem der Ansprüche 1 bis 8, **dadurch gekennzeichnet, dass** das Hydrophobierungsmittel im kontinuierlichen Durchlauf, z. B. in-line in einer Kantenleistenbefestigungsanlage, z. B. einer bzw. Kantenbandanleimmaschine, oder nachträglich oder zuvor in einer separaten Anlage aufgebracht wird.

10. Verfahren nach einem der Ansprüche 1 bis 9, **dadurch gekennzeichnet, dass** da Hydrophobierungsmittel nach dem Befestigen der Kantenleiste im Bereich der Verbindungsfuge aufgebracht wird.

11. Verfahren nach einem der Ansprüche 1 bis 10, **dadurch gekennzeichnet, dass** das Hydrophobierungsmittel zunächst auf die Schmalfläche der Möbelplatte aufgebracht und anschließend die Kante befestigt wird.

12. Verfahren nach Anspruch 11, **dadurch gekennzeichnet, dass** das Hydrophobierungsmittel nur partiell, z. B. nur in den (beiden) Randbereichen der Schmalfläche der Möbelplatte aufgebracht wird.

13. Vergütete Möbelplatte, hergestellt bzw. vergütet nach einem Verfahren nach einem der Ansprüche 1 bis 12.
